# EUROPEAN PATENT SPECIFICATION

(11) **EP 3 431 852 B1**
(45) Date of publication and mention of the grant of the patent: **07.06.2023**
(21) Application number: 17382481.4
(22) Date of filing: 20.07.2017
(51) Int. Cl.: F16L 37/14

(54) **FEMALE CONNECTOR OF A PLUG-IN CONNECTOR**
STECKBUCHSE EINER STECKVERBINDUNG
RACCORD FEMELLE POUR UN RACCORD À FICHE

(43) Date of publication of application: 23.01.2019
(73) Proprietor: Matz Erreka, S. Coop., 20577 Antzuola (ES)
(72) Inventor: LIZARRALDE ITURBE, Juan Cruz, 20577 Antzuola (ES); ITURRIOZ SOTO, Naroa, 48370 Bermeo (ES)
(74) Representative: Igartua, Ismael

(56) References cited:
- WO-A1-2012/001609
- WO-A1-2016/053474
- FR-A1- 2 891 889
- US-A1- 2008 001 398
- US-A1- 2010 176 589

## Description

### TECHNICAL FIELD

The present invention relates to connectors for rigid and flexible tubes wherein a male connector is coupled to a female connector, and more specifically to connectors where one of the connectors comprises two parts attached to one another.

### PRIOR ART

Plug-in connectors comprising a female connector and a male connector are known, wherein each connector is fixed at one end to a rigid or flexible tube, said connectors interacting with one another for fluidically joining both tubes in a fast and efficient manner.

In connectors of this type, the free end of the female connector usually comprises retention means, generally a U-shaped rod, cooperating with the male connector for retaining it inside the female connector. During insertion of the male connector, the retention means are elastically deformed and they return to their original position when the retention means contact a recess or groove arranged in the male connector, such that the male connector is retained by said elastic means.

Connectors wherein the female connector is made up of two parts attached to one another to form a single part are also known.

In this sense, US20100176589A1 discloses a female connector comprising a head attached to a body. The female connector is configured for being connected to a male connector. A contact area comprising a line of contact, which is communicated with the inside of the female connector, is defined between the head and the body of the female connector. The female connector also comprises a sealing gasket for assuring leak-tightness between the female connector and the male connector.

FR2891889 A1 discloses a plug-in connector with a female and male connectors. The female connector is composed by a body and a head, the body being fixing to said head by ultrasonic welding. A contact area comprising a line of contact, which is communicated with the inside of the female connector, is defined between the head and the body of the female connector. The female connector also comprises a sealing gasket for assuring leak-tightness between the female connector and the male connector. The line of contact is arranged in a previous axial position with respect to at least part of said sealing gasket in the direction of insertion of the male connector into the female connector, such that the sealing gasket itself assures the leak-tightness in the line of contact.

### DISCLOSURE OF THE INVENTION

The object of the invention is to provide a female connector of a plug-in connector and a plug-in connector, as defined in the claims.

The plug-in connector of the invention comprises a female connector according to the invention and a male connector that can be coupled to said female connector. The female connector of the invention comprises a head configured for being connected to a male connector and a body fixed to said head which is configured for being attached to a pipe/hose. A contact area comprising a line of contact communicated with the inside of the female connector is defined between the head and the body. The plug-in connector also comprises a sealing gasket configured for assuring leak-tightness between the female connector and the male connector.

In the female connector of the invention, the line of contact is arranged in an previous axial position with respect to at least part of the sealing gasket in the direction of insertion of the male connector into the female connector, such that the sealing gasket itself also assures the leak-tightness in the line of contact.

The contact area between the head and the body comprises a perimetral attachment area wherein the head and the body are permanently attached by welding, preferably by ultrasonic welding. Said attachment area comprises a perimetral recess arranged in the body or in the head, and a protuberance arranged in the head or in the body, part of said protuberance being configured to be melted. The protuberance projects from a perimetral recess having side walls and is housed in the recess of the body or head such that said protuberance of the head or body does not project from said recess of the body or head during the process of welding, the perimetral recess collecting the molten material of the protuberance in the welding process such that said molted material solidifies inside the recess of the body or head, and the perimetral recess having side walls retaining the molten material in case that said molten material spills over the other perimetral recess.

Different types of connectors, for example linear connectors, elbow connectors, etc., which allow being adapted to different usage needs according to their environment, can be formed in a quick and efficient manner, and with the minimum number of references possible, using the female connector of the invention. Likewise, the leak-tightness between the male connector and the female connector, and between both parts of the female connector, can be assured using a single sealing gasket.

These and other advantages and features of the invention will become evident in view of the drawings and the detailed description of the invention.

### DESCRIPTION OF THE DRAWINGS

Figure 1A shows an exploded, sectioned view of the plug-in connector according to the invention, wherein the female connector and the male connector are not coupled.
Figure 1B shows an exploded, sectioned view of the female connector of the plug-in connector of Figure 1A but without the sealing gasket.
Figure 2A shows a cross-section of the female connector of Figure 1A.
Figure 2B shows a first detail of the female connector of Figure 1A.
Figure 2C shows a second detail of the female connector of Figure 1A but without the sealing gasket.
Figure 2D shows a detail of the female connector of Figure 1A, once the body and the head are fixed to one another.
Figure 2E schematically shows the male connector introduced in the already fixed female connector of Figure 1A.
Figure 3 shows a detail of the head of the female connector of Figure 1A.
Figure 4 shows a detail of the body of the female connector of Figure 1A.
Figure 5 shows a perspective view of the body of the female connector of Figure 1A.
Figure 6 shows a perspective view of the head of the female connector of Figure 1A.

### DETAILED DISCLOSURE OF THE INVENTION

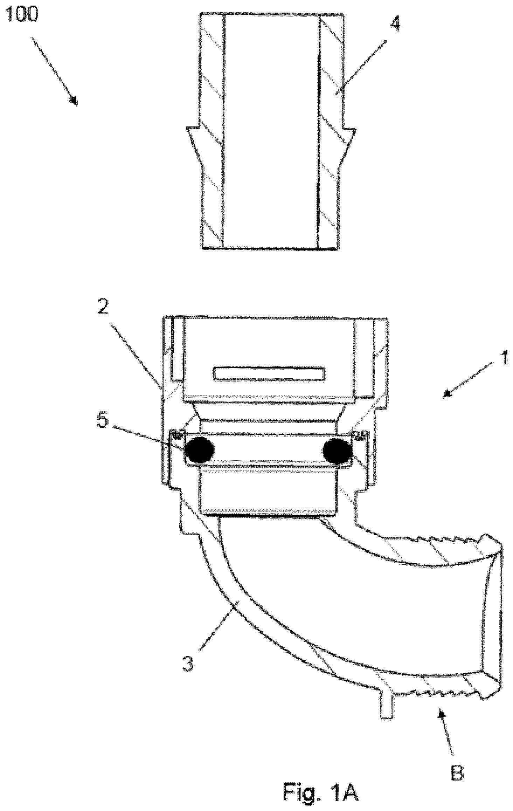

Figure 1A shows the plug-in connector 100 according to a preferred embodiment of the invention. As shown in said figure, the connector 100 comprises a female connector 1 and a male connector 4 that can be coupled to said female connector 1. Both the female connector 1 and the male connector 4 are configured for being attached at one end to a pipe or a hose (not shown in the drawings), such that the plug-in connector 100 makes it possible to establish a quick and effortless fluid communication between both pipes/hoses. Preferably, said end comprises a notched area B to favor attachment to the pipe/hose, as seen in Figures 1A, 1B, 2A, 2E, or 5 for the female connector 1.

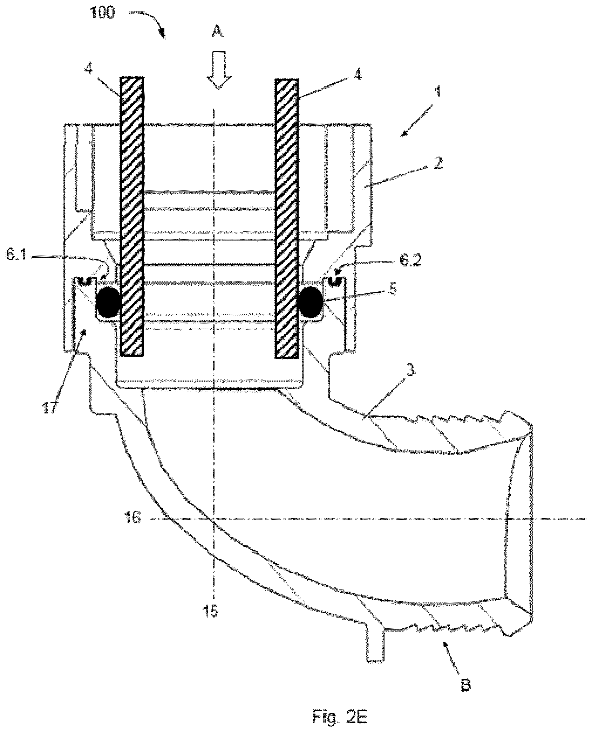

The male connector 4 is introduced into the female connector 1 at the opposite end, as schematically depicted in Figure 2E, the male connector 4 being retained inside the female connector 1 by elastic retention means (not shown in the drawings). Said retention means are preferably in the form of a U-shaped wire.

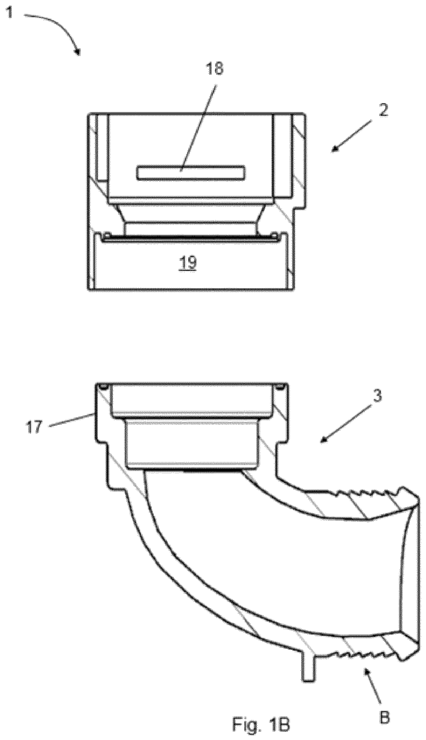

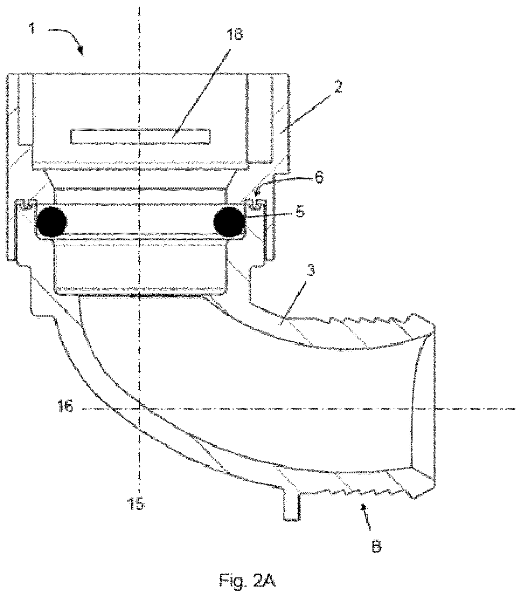

As seen in Figures 1B and 2A, the female connector 1 comprises a head 2 configured for being connected to the male connector 4 and a body 3 which is permanently fixed to said head 2. In the female connector 1 of the invention, the body 3 is configured for being attached to the pipe/hose (not shown in the drawings). A contact area 6 comprising a line of contact 6.1 communicated with the inside of the female connector 1 is defined between the head 2 and the body 3.

In the preferred embodiment of the invention, the head 2 comprises a recess 19 at one end for housing part of the body 3.

The retention means are arranged on the outer portion of the head 2 of the female connector 1, the arms of said retention means going through a respective groove 18 arranged in the head 2 to retain the male connector 4 when it is introduced in the female connector 1.

The plug-in connector 100 also comprises a sealing gasket 5, preferably an O-ring, configured for assuring leak-tightness between the female connector 1 and the male connector 4, shown in Figure 2A, for example.

In the female connector 1 of the invention, the line of contact 6.1 is arranged in a previous axial position with respect to at least part of the sealing gasket 5 in the direction of insertion A of the male connector 4 into the female connector 1, such that the sealing gasket 5 itself also assures the leak-tightness in the line of contact 6.1.

Since the female connector 1 is formed by at least two parts, the head 2 and the body 3, different types of connectors can be obtained in a simple, fast and efficient manner, and with the minimum number of references. For example, linear connectors and different variants of elbow connectors can be obtained.

For the same diameter, a plethora of female elbow connectors 1 with two references, i.e., with a body 3 attached to the head 2, can be obtained since said body 3 can be attached according to different positions. If it is desired to vary the angle of the elbow of the female connector 1, it is enough to obtain another body 3 with said angle, and different variants can be obtained by attaching said body 3 to the head 2 in different positions.

Obtaining the female connector 1 at least in two portions, i.e., the head 2 and the body 3, allows significantly reducing not only the number of parts but also the number of molds for manufacturing the final female connector 1.

However, as the skilled person knows, if a fluid is to be circulated through the inside of said parts, the leak-tightness in the attachment areas between different parts must be assured, as in the case of the female connector 1 of the invention, so that said fluid does not leak out.

In the case of the plug-in connector 100 of the invention, it will be necessary to assure that the fluid circulating through the inside of the connector 100 does not leak out through the male-female connector attachment on one hand, and does not leak out through the head-body attachment of the female connector 1 on the other.

Since the line of contact 6.1 between the head 2 and the body 3 is arranged in a previous axial position with respect to at least part of the sealing gasket 5 in the direction of insertion A of the male connector 4 into the female connector 1, the same sealing gasket 5 assuring the leak-tight closure between the female connector 1 and the male connector 4 also assures the leak-tight closure between the head 2 and the body 3 of the female connector 1, as will be described in detail below.

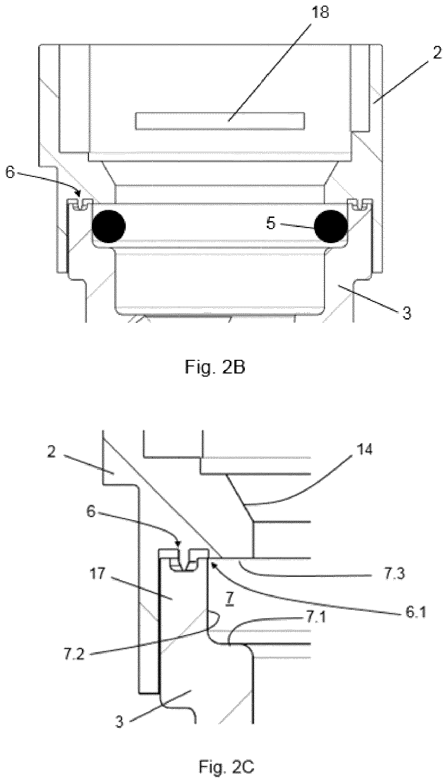

As the skilled person knows, sealing gaskets comprise a portion projecting radially from the housing of the gasket, as seen in Figure 2A or 2B.

When the male connector 4 is introduced in the female connector 1 as depicted schematically in Figure 2E, the outer wall of the male connector 4 presses on the sealing gasket 5, usually in the direction perpendicular to the axial direction of the female connector 1, causing the deformation of said sealing gasket 5. Therefore, as the skilled person knows, a sealing gasket will always assure a leak-tight closure in the direction where the closing pressure is exerted, in the example of the invention in the direction perpendicular to the axial direction of the female connector 1, i.e., in the radial direction.

Therefore, the fluid circulating through the inside of the plug-in connector 100, i.e. through the inside of the male connector 4 and the female connector 1, cannot go through the sealing gasket 5 and the outer wall of the male connector 4, nor through the sealing gasket 5 and the side surface 7.2 of the housing 7, and therefore will not be able to access the line of contact 6.1 of the contact area 6 defined between the head 2 and the body 3 of the female connector 1, since said line of contact 6.1 is arranged in a previous axial position with respect to at least part of the sealing gasket 5 in the direction of insertion A of the male connector 4 into the female connector 1. The leak-tightness between the male connector 4 and the female connector 1, and between both parts 2 and 3 forming the female connector 1, can therefore be assured using a single sealing gasket 5.

In the embodiment of the invention shown in the drawings, the line of contact 6.1 between the head 2 and the body 3 of the female connector 1 is arranged in an previous axial position with respect to the sealing gasket 5 in the direction of insertion A of the male connector 4 into the female connector 1, as seen in Figures 2A or 2C.

To make insertion of the male connector 4 into the female connector 1 easier, the female connector 1 comprises therein a conical area 14 such that it gets narrower in the direction of insertion A of the male connector 4 into the female connector 1.

In the preferred embodiment of the invention, said conical area 14 is arranged in the head 2, preferably in a previous axial position with respect to the line of contact 6.1 between the head 2 and the body 3 in the direction of insertion A of the male connector 4 into the female connector 1, as seen in Figure 2B.

The sealing gasket 5 of the invention is housed in a perimetral housing 7 which in the preferred embodiment of the invention is delimited by the body 3 and the head 2, as seen in Figure 2C.

According to the example of said Figure 2C, the housing 7 is delimited by a perimetral support base 7.1 and 7.2 arranged in the body 3 and by a surface 7.3 of the head 2. The perimetral support base comprises a support surface 7.1 perpendicular to the axis of the female connector 1 and a side surface 7.2 parallel to the axis of the female connector 1, the surface 7.3 of the head 2 being arranged parallel to the support surface 7.1.

As described, the perimetral housing 7 is delimited by the body 3 and the head 2 according to the preferred embodiment of the invention, but optionally it may also be arranged in the body 3 or even in the head 2.

In the preferred embodiment of the invention, the contact area 6 between the head 2 and the body 3 comprises a perimetral attachment area 6.2, the head 2 and the body 3 being permanently attached in said attachment area 6.2, as will be described in detail below.

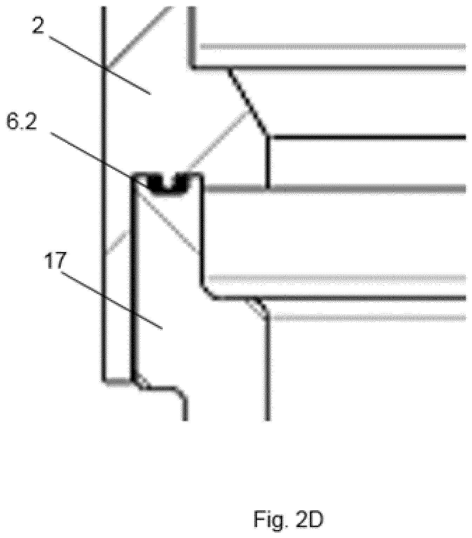

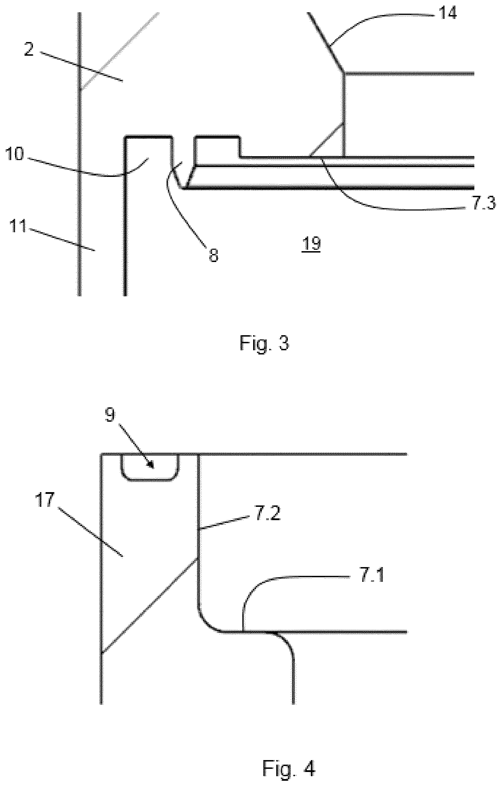

The attachment area 6.2 is a portion of the contact area 6 where the head 2 and the body 3 are permanently attached, preferably by ultrasonic welding. Figure 2D shows a detail of the attachment area 6.2 between the head 2 and the body 3 after carrying out the welding process. Said attachment area 6.2 is carried out in a perimetral recess 9, shown in Figure 4, which according to the preferred embodiment of the invention is arranged in the body 3, preferably at the end 17 cooperating with the head 2, although optionally it could also be arranged in the head 2. According to the preferred embodiment of the invention, the head 2 comprises a protuberance 8, shown in Figure 3, said protuberance 8 being housed in the recess 9 such that the protuberance 8 does not project from the recess 9 during the welding process for forming the attachment area 6.2.

According to the embodiment of the invention shown in the drawings, the protuberance 8 projects from a perimetral recess 10, as shown in the detail of Figure 3.

As the skilled person knows, focused heating occurs during the welding process, in this case in the attachment area 6.2, causing the localized melting of the contacting parts to be welded, in this case the protuberance 8 and part of the recess 9.

In the example of the invention, part of the protuberance 8 is melted, the recess 9 collecting said molten material such that it does not spill over, said molten material solidifying inside the recess 9. The molten material is thereby prevented from rising to the surface of the female connector 1, or from being able to reach the inside of the female connector 1.

Even in the hypothetical case in which the molten material spills over the recess 9 of the body 3, said molten material would be advantageously retained in the recess 10 of the head 2, said recess 10 providing sides walls which prevent the molten material from being able to pass into the female connector 1 or to rise towards the outside of the female connector 1.

If the perimetral recess 9 is arranged in the head 2 instead of in the body 3, then the protuberance 8 would obviously have to be arranged in the body 3 and not in the head 2, without altering the concept of the invention.

If the fluid circulating through the inside of the plug-in connector 100 reaches the contact area 6.2, seeping out through the line of contact 6.1 and the contact area 6, said fluid can damage the attachment between the head 2 and the body 3 over time, even being able to cause the separation of both parts 2 and 3.

To prevent this phenomenon, the line of contact 6.1 is advantageously arranged in a previous axial position with respect to the sealing gasket 5 in the direction of insertion A of the male connector 4 into the female connector 1, as described; therefore, the fluid circulating through the inside of the plug-in connector cannot access the line of contact 6.1, and therefore the attachment area 6.2.

According to the preferred embodiment of the invention, the head 2 comprises a perimetral side wall 11 partially covering the body 3, as shown in Figures 2A, 2B or 2D, said wall 11 being the wall of the recess 19 of the head 2 where the body 3 is housed.

The contact area between said side wall 11 and the body 3 is part of the contact area 6, but in the preferred embodiment of the invention, there is no attachment area in said portion, although the possibility of there being another contact area along contact area 6 is not ruled out.

As described, a plurality of connectors 1, preferably elbow connectors, can be obtained with the minimum number of tools and intermediate references by dividing the female connector 1 into two parts, i.e., in the head 2 and the body 3. For example, by positioning a bent body 3 with respect to the head 2 according to different angles, different configurations of the female connector 1 can be obtained without having to invest too much in tools.

The female connector 1 of the embodiment of the invention is an elbow connector formed by the head 2 comprising a linear axial axis 15, and a bent body 3 comprising an end 17 cooperating with the head 2 (said end 17 being housed in the recess 19 of the head 2) and comprising a linear axial axis 15 which coincides with the axial axis 15 of the head 2 once the body 3 is fixed to the head 2, and another end, preferably the end comprising the notched area to favor attachment to the pipe/hose, comprising an axial axis 16, in this case perpendicular to the axial axis 15 of the end 17, both ends being joined by a hollow curved area. In the example of the embodiment of the invention, the female connector 1 is a 90° elbow connector, any angle being able to be obtained at the second end.

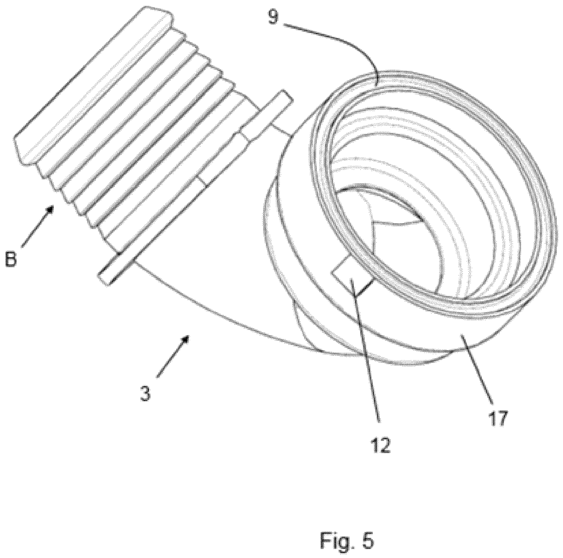

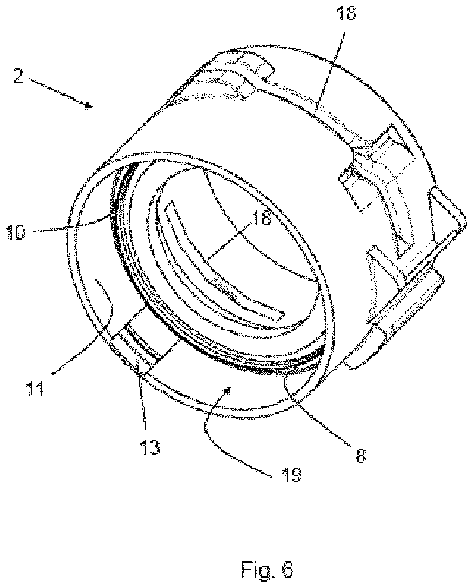

To accurately know the relative position between the head 2 and the body 3 before permanently fixing both parts to form the female connector 1 with the desired configuration, the body 3 comprises a radial side protuberance 12, shown in Figure 5, and the side wall 11 of the head 2 comprises on the inner surface thereof a guiding groove 13, shown in Figure 6, also radial, such that the protuberance 12 of the body 3 is housed in the guiding groove 13 of the side wall 11 of the head 2, the relative position between both parts 2 and 3 being defined.

Since the protuberance 12 of the body 3 and the guiding groove 13 of the head 2 are radial in nature, undercuts are not generated in the corresponding molds and the position thereof in the mold can be readily changed.

## Claims

1. Female connector for a plug-in connector wherein the female connector comprises a head (2) configured for being connected to a male connector (4), a body (3) fixed to said head (2) configured for being attached to a pipe/hose, a contact area (6) being defined between the head (2) and the body (3), said contact area (6) comprising a line of contact (6.1) communicated with the inside of the female connector (1), and a sealing gasket (5) configured for assuring leak-tightness between the female connector (1) and the male connector (4), the line of contact (6.1) being arranged in a previous axial position with respect to at least part of the sealing gasket (5) in the direction of insertion (A) of the male connector (4) into the female connector (1), such that the sealing gasket (5) itself assures the leak-tightness in the line of contact (6.1), the contact area (6) between the head (2) and the body (3) comprising a perimetral attachment area (6.2) wherein the head (2) and the body (3) are permanently attached by welding, said attachment area (6.2) comprising a perimetral recess (9) arranged in the body (3) or in the head (2), and a protuberance (8) arranged in the head (2) or in the body (3), part of said protuberance (8) being configured to be melted, **characterized in that** the protuberance (8) projects from a perimetral recess (10) having side walls and is housed in the recess (9) of the body (3) or head (2) such that said protuberance (8) of the head (2) or body (3) does not project from said recess (9) of the body (3) or head (2) during the process of welding, the perimetral recess (9) collecting the molten material of the protuberance (8) in the welding process such that said molted material solidifies inside the recess (9) of the body (3) or head (2), and the perimetral recess (10) having side wall retaining the molten material in case that said molten material spills over the other perimetral recess (9).

2. Female connector according to claim 1, wherein the line of contact (6.1) is arranged in a previous axial position with respect to the sealing gasket (5) in the direction of insertion (A) of the male connector (4) into the female connector (1).

3. Female connector according to claim 1 or 2, wherein the sealing gasket (5) is housed in a perimetral housing (7) delimited by the body (3) and the head (2).

4. Female connector according to claim 3, wherein the housing (7) of the sealing gasket (5) is delimited by a perimetral support base (7.1, 7.2) arranged in the body (3), the support base (7.1, 7.2) comprising a support surface (7.1) perpendicular to the axis of the female connector (1) and a side surface (7.2) parallel to the axis of the female connector (1), and by a surface (7.3) of the head (2) arranged parallel to the support surface (7.1).

5. Female connector according to claim 2, wherein the sealing gasket (5) is housed in a perimetral housing (7) arranged in the body (3).

6. Female connector according to any of the preceding claims, wherein the head (2) and the body (3) are attached in the attachment area (6.2) by ultrasonic welding.

7. Female connector according to any preceding claims, wherein the recess (9) is arranged in the body (3) and the protuberance (8) is arranged in the head (2).

8. Female connector according to any of the preceding claims, wherein the head (2) comprises a perimetral side wall (11) partially covering the body (3).

9. Female connector according to claim 8, wherein the body (3) comprises a side projection (12) and the side wall (11) of the head (2) comprises on the inner surface thereof a guiding groove (13), the projection (12) of the body (3) being housed in the guiding groove (13) of the side wall (11) of the head (2).

10. Plug-in connector, **characterized in that** it comprises a female connector (1) according to any of the preceding claims and a male connector (4) attachable to said female connector (1).

## Patentansprüche

1. Steckbuchse für eine Steckverbindung, wobei die Steckbuchse einen Kopf (2), welcher dazu ausgebildet ist, mit einem Stecker (4) verbunden zu werden, und einen Körper (3), welcher mit dem genannten Kopf (2) fixiert ist und dazu ausgebildet ist, an einem Rohr/Schlauch befestigt zu werden, wobei ein Kontaktbereich (6) zwischen dem Kopf (2) und dem Körper (3) definiert wird, wobei der genannte Kontaktbereich (6) eine Kontaktlinie (6.1) umfasst, welche mit dem Inneren der Steckbuchse (1) kommuniziert, und eine Dichtung (5), welche dazu ausgebildet ist, die Leckdichtheit zwischen der Steckbuchse (1) und dem Stecker (4) zu gewährleisten umfasst, wobei die Kontaktlinie (6.1) in einer vorherigen Axialstellung in Bezug auf mindestens einen Teil der Dichtung (5) in der Einsteckrichtung (A) des Steckers (4) in die Steckbuchse (1) angeordnet ist, sodass die Dichtung (5) selbst die Leckdichtheit in der Kontaktlinie (6.1) gewährleistet, wobei der Kontaktbereich (6) zwischen dem Kopf (2) und dem Körper (3) einen umfänglichen Befestigungsbereich (6.2) umfasst, wobei der Kopf (2) und der Körper (3) dauerhaft mittels Schweißens befestigt sind, wobei der genannte Befestigungsbereich (6.2) eine umfängliche Ausnehmung (9), welche im Körper (3) oder im Kopf (2) angeordnet ist, und einen Vorsprung (8), welcher im Kopf (2) oder im Körper (3) angeordnet ist, umfasst, wobei ein Teil des genannten Vorsprungs (8) dazu ausgebildet ist, geschmolzen zu werden, **dadurch gekennzeichnet, dass** der Vorsprung (8) aus einer umfänglichen Ausnehmung (10), welche Seitenwände aufweist, hervorsteht und in der Ausnehmung (9) des Körpers (3) oder des Kopfes (2) aufgenommen ist, sodass der genannte Vorsprung (8) des Kopfes (2) oder des Körpers (3) nicht aus der genannten Ausnehmung (9) des Körpers (3) oder des Kopfes (2) während des Schweißprozesses hervorsteht, wobei die umfängliche Ausnehmung (9) das geschmolzene Material des Vorsprungs (8) im Schweißprozess auffängt, sodass sich das genannte geschmolzene Material innerhalb der Ausnehmung (9) des Körpers (3) oder des Kopfes (2) verfestigt, und wobei die umfängliche Ausnehmung (10) eine Seitenwand aufweist, welche das geschmolzene Material zurückhält, im Falle dass das genannte geschmolzene Material aus der anderen umfänglichen Ausnehmung (9) ausläuft.

2. Steckbuchse nach Anspruch 1, wobei die Kontaktlinie (6.1) in einer vorherigen Axialstellung in Bezug auf die Dichtung (5) in der Einsteckrichtung (A) des Steckers (4) in die Steckbuchse (1) angeordnet ist.

3. Steckbuchse nach Anspruch 1 oder 2, wobei die Dichtung (5) in einer umfänglichen Aufnahme (7) aufgenommen ist, welche vom Körper (3) und vom Kopf (2) begrenzt ist.

4. Steckbuchse nach Anspruch 3, wobei die Aufnahme (7) der Dichtung (5) von einer umfänglichen Stützbasis (7.1, 7.2), welche im Körper (3) angeordnet ist, wobei die Stützbasis (7.1, 7.2) eine Stützfläche (7.1), welche senkrecht zur Achse der Steckbuchse (1) ist, und eine Seitenfläche (7.2), welche parallel zur Achse der Steckbuchse (1) ist, umfasst, und von einer Fläche (7.3) des Kopfes (2), welche parallel zur Stützfläche (7.1) angeordnet ist, begrenzt ist.

5. Steckbuchse nach Anspruch 2, wobei die Dichtung (5) in einer umfänglichen Aufnahme (7) aufgenommen ist, welche im Körper (3) angeordnet ist.

6. Steckbuchse nach einem der vorhergehenden Ansprüche, wobei der Kopf (2) und der Körper (3) im Befestigungsbereich (6.2) mittels Ultraschallschweißens befestigt sind.

7. Steckbuchse nach einem der vorhergehenden Ansprüche, wobei die Ausnehmung (9) im Körper (3) angeordnet ist und der Vorsprung (8) im Kopf (2) angeordnet ist.

8. Steckbuchse nach einem der vorhergehenden Ansprüche, wobei der Kopf (2) eine umfängliche Seitenwand (11) umfasst, welche teilweise den Körper (3) deckt.

9. Steckbuchse nach Anspruch 8, wobei der Körper (3) eine seitliche Auskragung (12) umfasst und die Seitenwand (11) des Kopfes (2) auf der Innenfläche derselben eine Führungsnut (13) umfasst, wobei die Auskragung (12) des Körpers (3) in der Führungsnut (13) der Seitenwand (11) des Kopfes (2) aufgenommen ist.

10. Steckverbindung, **dadurch gekennzeichnet, dass** sie eine Steckbuchse (1) nach einem der vorhergehenden Ansprüche und einen Stecker (4), welcher an der genannten Steckbuchse (1) befestigbar ist, umfasst.

## Revendications

1. Raccord femelle pour un raccord à fiche dans lequel le raccord femelle comprend une tête (2) configurée pour être connectée à un raccord mâle (4), un corps (3) fixé à ladite tête (2) configuré pour être attaché à un tuyau/tuyau, une zone de contact (6) étant définie entre la tête (2) et le corps (3), ladite zone de contact (6) comprenant une ligne de contact (6. 1) communiquant avec l'intérieur du raccord femelle (1), et un joint d'étanchéité (5) configuré pour assurer l'étanchéité entre le raccord femelle (1) et le raccord mâle (4), la ligne de contact (6.1) étant disposée dans une position axiale précédente par rapport à au moins une partie du joint d'étanchéité (5) dans la direction d'insertion (A) du raccord mâle (4) dans le raccord femelle (1), de sorte que le joint d'étanchéité (5) assure lui-même l'étanchéité dans la ligne de contact (6.1), la zone de contact (6) entre la tête (2) et le corps (3) comprenant une zone de fixation périmétrique (6. 2) dans laquelle la tête (2) et le corps (3) sont fixés de façon permanente par soudage, ladite zone de fixation (6. 2) comprenant un évidement périmétrique (9) disposé dans le corps (3) ou dans la tête (2), et une protubérance (8) disposée dans la tête (2) ou dans le corps (3), une partie de ladite protubérance (8) étant configurée pour être fondue, **caractérisé en ce que** la protubérance (8) fait saillie d'un évidement périmétrique (10) ayant des parois latérales et est logée dans l'évidement (9) du corps (3) ou de la tête (2) de sorte que ladite protubérance (8) de la tête (2) ou du corps (3) ne fait pas saillie dudit évidement (9) du corps (3) ou de la tête (2) pendant le processus de soudage, l'évidement périmétrique (9) recueillant le matériau fondu de la protubérance (8) dans le processus de soudage de sorte que ledit matériau fondu se solidifie à l'intérieur de l'évidement (9) du corps (3) ou de la tête (2), et l'évidement périmétrique (10) ayant une paroi latérale retenant le matériau fondu dans le cas où ledit matériau fondu déborde de l'autre évidement périmétrique (9).

2. Raccord femelle selon la revendication 1, dans lequel la ligne de contact (6.1) est disposée dans une position axiale précédente par rapport au joint d'étanchéité (5) dans la direction d'insertion (A) du raccord mâle (4) dans le raccord femelle (1).

3. Raccord femelle selon la revendication 1 ou 2, dans lequel le joint d'étanchéité (5) est logé dans un logement périmétrique (7) délimité par le corps (3) et la tête (2).

4. Raccord femelle selon la revendication 3, dans lequel le logement (7) du joint d'étanchéité (5) est délimité par une base d'appui périmétrique (7.1, 7.2) disposée dans le corps (3), la base d'appui (7.1, 7.2) comprenant une surface d'appui (7.1) perpendiculaire à l'axe du raccord femelle (1) et une surface latérale (7.2) parallèle à l'axe du raccord femelle (1), et par une surface (7.3) de la tête (2) disposée parallèlement à la surface d'appui (7.1).

5. Raccord femelle selon la revendication 2, dans lequel le joint d'étanchéité (5) est logé dans un logement périmétrique (7) disposé dans le corps (3).

6. Raccord femelle selon l'une quelconque des revendications précédentes, dans lequel la tête (2) et le corps (3) sont fixés dans la zone de fixation (6.2) par soudage par ultrasons.

7. Raccord femelle selon l'une quelconque des revendications précédentes, dans lequel l'évidement (9) est disposé dans le corps (3) et la protubérance (8) est disposée dans la tête (2).

8. Raccord femelle selon l'une quelconque des revendications précédentes, dans lequel la tête (2) comprend une paroi latérale périmétrique (11) recouvrant partiellement le corps (3).

9. Raccord femelle selon la revendication 8, dans lequel le corps (3) comprend une saillie latérale (12) et la paroi latérale (11) de la tête (2) comprend sur sa surface interne une rainure de guidage (13), la saillie (12) du corps (3) étant logée dans la rainure de guidage (13) de la paroi latérale (11) de la tête (2).

10. Raccord enfichable, **caractérisé en ce qu'**il comprend un raccord femelle (1) selon l'une quelconque des revendications précédentes et un raccord mâle (4) pouvant être fixé sur ledit raccord femelle (1).
